# EUROPEAN PATENT APPLICATION

(11) **EP 2 884 613 A1**
(43) Date of publication of application: **17.06.2015**
(21) Application number: 13196363.9
(22) Date of filing: 10.12.2013
(51) Int. Cl.: H02J 3/14, H02J 13/00, H02J 3/00

(54) **Energy monitoring and simulation system and method for buildings**

(71) Applicant: Fundación Instituto Tecnológico de Galicia, 15190 - Mesoiro A Coruna (ES)
(72) Inventor: Carrasco Ortega, Pablo, 15190 Mesoiro A Coruña (ES); Faraldo Sordo, Maria Almudena, 15190 Mesoiro A Coruña (ES); Coutado Vila, Fernando, 15190 Mesoiro A Coruña (ES); Lopez Gonzalez, Lucia, 15190 Mesoiro A Coruña (ES); Seoane Brandariz, Jorge, 15190 Mesoiro A Coruña (ES); Lopez Fidalgo, M Analia, 15190 Mesoiro A Coruña (ES); Rodriguez Charlon, Santiago Angel, 15190 Mesoiro A Coruña (ES); Zaragoza Fernandez, Sonia, 15190 Mesoiro A Coruña (ES); Rodriguez Suarez, Evaristo, 15190 Mesoiro A Coruña (ES)
(74) Representative: Carvajal y Urquijo, Isabel

(57) **Abstract**

Energy monitoring and simulation system and method for buildings. The system comprises:
- a plurality of sensor devices (200) installed in different areas within the building to be monitored on an energetic basis, each one of said sensor devices (200) having:
* sensory means (300, 302, 304) to obtain the values of the parameters used in the energetic assessment of the building;
* data processing means (306) configured to receive the information captured by the sensory means (300, 302, 304);
* communication means (308) in charge of receiving and externally communicating the information from the sensory means (300, 302, 304) conveniently processed by the data processing means;

- a server (220), with access to a database (204), configured to:
* receive, through a communications network (202), the information coming from the sensor devices (200);
* store said information in the database (204);
* assess and monitor the energetic balance (102, 106) in the building from said information based on real samples taken (100).

## Description

### Field of the invention

The present invention is encompassed within the field of solutions for the energy simulation of buildings.

### Background of the invention

Current energy simulation solutions for buildings present the following difficulties:
- Air renewal values are estimated based on databases or formulations based on laboratory experiments. The final energy balance is very sensible to air renewal energy, which is why it is very important not to make any mistakes in this field.
- Current programs do not calculate real PPD and PMV values. PMV represents the "predicted median vote" (in the thermal sensation scale) of a group of people exposed to a certain environment, while PPD is the predicted percentage of dissatisfied people in each PMV, as advised in the Regulation for Thermal Installations in Buildings (RTIB), because the conditions of thermal comfort of the occupants are also estimated and not real. A variation of 1 to 2 degrees of temperature in a 2,000 m²-building represents a significant variation in the energy expenditure.
- Current programs carry out the calculations with climatic values taken from general databases and these values usually have considerable differences with the areas to be analyzed due to the micro-climatic variety typical of temperate climates. Current programs do not allow the inclusion of real values, thereby affecting the results in a significant manner.
- Current programs are only used for design purposes, without including the regulation of energetic conditions. These conditions are managed by climate control equipment that is already installed taking as reference estimates instead of real measurements, which leads to oversized and underused installations.

### Description of the invention

The present invention consists of an energy monitoring and simulation system and method for buildings.

The invention uses a database in the building under study to calculate the air renewal value. Aside from obtaining air renewal through infiltration and ventilation in this manner, the quality of the air within the households is also quantified.

The present system allows calculating installations with real conditions and to regulate the same subsequently under real conditions as well, providing a high level of energy efficiency.

The system is composed of a set of sensors connected to software specifically created for the energetic assessment of buildings. These sensors, which communicate with each other and with the assessment software wirelessly, measure temperature, humidity and CO₂ concentrations in the room being measured. These parameters, according to the studies undertaken, represent the energetic efficiency of a building and are sufficient for the optimal sizing of the weather control and ventilation systems of the building.

The present invention has been conceived from the point of view of the analysis of energy and not only for the calculation thereof, which provides it with the following advantages with respect to existing products in the market:
- The system is mainly conceived for buildings that have already been built and that are currently in use. Current programs are conceived for new buildings.
- It allows monitoring a building in real time, obtaining global and partial temperatures, humidity levels, air renewal and energetic values. It allows the technician responsible for the maintenance of the building to carry out an efficient energy management process in real time. That is to say, the necessary corrective measures can be adopted upon the occurrence of an energy-related problem. The rest of current programs are exclusively aimed at the engineering process and cannot be used for energy management in real time and by the users themselves.
- It allows the calculation and design of construction installations and solutions based on real data. The rest of the programs use estimates from databases.
- It guarantees the compliance with the regulations, given that it adjusts the internal conditions to the real thermal comfort conditions of its users by means of real data collected instantaneously and not by means of estimates.
- It allows carrying out an economic feasibility analysis, from the energetic point of view, of the different construction alternatives, both for new buildings and for rehabilitation purposes.
- With respect to current recording systems for CO₂, temperature and humidity, the present system provides a solution to carry out measurement campaigns by means of portable measurement devices sending the measured information in real time. This way, environmental comfort data is processed in real time and in an automatized manner in a remote server by the energetic balance and thermal comfort calculation software.
- It assesses, from the energetic point of view, all the construction and installation possibilities such that its economic impact in future maintenance is verified, due to which it allows the comparison of current and future maintenance expenses, the calculation of savings, and therefore, of the return on investment period in the case the construction solution being assessed is executed.
- It allows the assessment of several construction solutions and their economic comparison, thereby facilitating the selection of the sustainable rehabilitation.

Next, Table 1 shows a comparison between conventional recorders and the proposed recorders:

**Table 1**

| **Conventional recorders** | **Proposed recorders** |
|---|---|
| Data is obtained after carrying out the measurement campaign | Real-time data |
| Manual data extraction | Automatized data extraction to a web server |
| Individual data processing by measurement equipment | Automatized data processing in a web platform and with software specialized in energetic balance and thermal comfort |

In short, the most important advantages provided by this invention with respect to the current state of the art are the following:
- It is very flexible, given that all the features of the building, environment and occupants are variables in it. In current systems this is not the case, given that the input variables are the construction variables only; external climate variables cannot be introduced, and the particularity of thermal comfort in each case is never taken into account; rather, the general case is taken. This variability is allowed by the regulation. However, the programs existing in the market do not, which is why the programs are created for new buildings and not to make alterations.
- The invention provides results that can be estimated on a long-term basis over time, based on the real behavior of the building and its occupants. This allows assessing the energetic balance minute by minute, hour by hour, or day by day, indicating the energetic issues currently taking place, which will allow the scheduling of the alterations already aimed at solving the energetic issues. Therefore, an estimative study of the energy expenditures and savings produced in heating and air conditioning consumption due to the alterations can then be carried out in the figure.

Specifically, the energy monitoring and simulation system for buildings comprises the following:
- a plurality of sensor devices installed in different areas within the building to be monitored on an energetic basis, each one of said sensor devices having:
   * sensory means to obtain the values of the parameters used in the energetic assessment of the building;
   * data processing means configured to receive the information captured by the sensory means;
   * communication means in charge of receiving and externally communicating the information from the sensory means conveniently processed by the data processing means;
- a server (220), with access to a database, configured to:
   * receive, through a communications network, the information coming from the sensor devices;
   * store said information in the database;
   * assess and monitor the energetic balance in the building from said information based on real samples taken.

In a preferred embodiment, the sensory means of the sensor devices comprise a humidity sensor, a temperature sensor, and a CO₂ sensor.

The server is preferably configured to, from the information based on real samples taken, assess the thermal comfort conditions of the users of the building and verify air quality in the building and air renewal values.

The server can be configured to, from the thermal comfort conditions and air quality of the building that were previously obtained, assess the energy necessary for the maintenance thereof over time.

The server can also be configured to:
- determine the category of the thermal environment to establish the wellbeing conditions,
- to assess, on a global basis and over a long period of time, the energetic balance based on said environmental category and the information based on real samples taken, collected during said period of time.

The server can also be configured to:
- simulate, based on the data of the real samples from different construction proposals (108), to obtain the corresponding energetic balance;
- compare the energetic balances obtained for the different construction proposals;
- obtain, based on said comparison, the optimal construction proposal to optimize the combination between maximum energy savings and a minimum return on investment period.

The server is preferably configured to allow the access to the information registered in the database through a web platform.

The communication means of the sensor devices are preferably wireless communication modules, the sensor devices being in this case configured to form wireless nodes with mesh communication topography to establish a communications network to channel the information from each sensor node towards a network coordinator node in charge of the communication with the server.

Another object of the present invention is an energy monitoring and simulation method for buildings, which comprises:
- monitoring, in different areas within the building, the values of the parameters used in the energetic assessment of the building:
- communicating the information to a server with access to a database;
- storing said information in the database;
- from said information, based on the data of the real samples taken, assessing and monitoring the energetic balance of the building.

In a preferred embodiment, the parameters monitored in the method are: temperature, relative humidity and CO₂ concentration.

The method can comprise, from information based on the data of the real samples, assessing the thermal comfort conditions of the users of the building and verify the air quality of the building and the air renewal values.

Likewise, the method can comprise, from the thermal comfort conditions and air quality of the building that were previously obtained, assessing the energy necessary for the maintenance thereof over time.

The method can comprise:
- determining the category of the thermal environment to establish the wellbeing conditions,
- assessing, on a global basis and over a long period of time, the energetic balance based on said environmental category and the information based on real samples taken, collected during said period of time.

The method can also comprise:
- simulating, based on the data of the real samples from different construction proposals (108), to obtain the corresponding energetic balance;
- comparing the energetic balances obtained for the different construction proposals;
- obtaining, based on said comparison, the optimal construction proposal to optimize the combination between maximum energy savings and a minimum return on investment period.

The method preferably comprises enabling the access to the information recorded in the database through a web platform.

### Brief description of the drawings

Next, a series of drawings will be very briefly described, which facilitate the comprehension of the invention and are expressly related to an embodiment of said invention presented as a non-limitative example thereof.
Figure 1 shows the programming guidelines.
Figure 2 represents the architecture of the system object of the invention.
Figure 3 represents the scheme of a sensor device used in the system.

### Detailed description of the invention

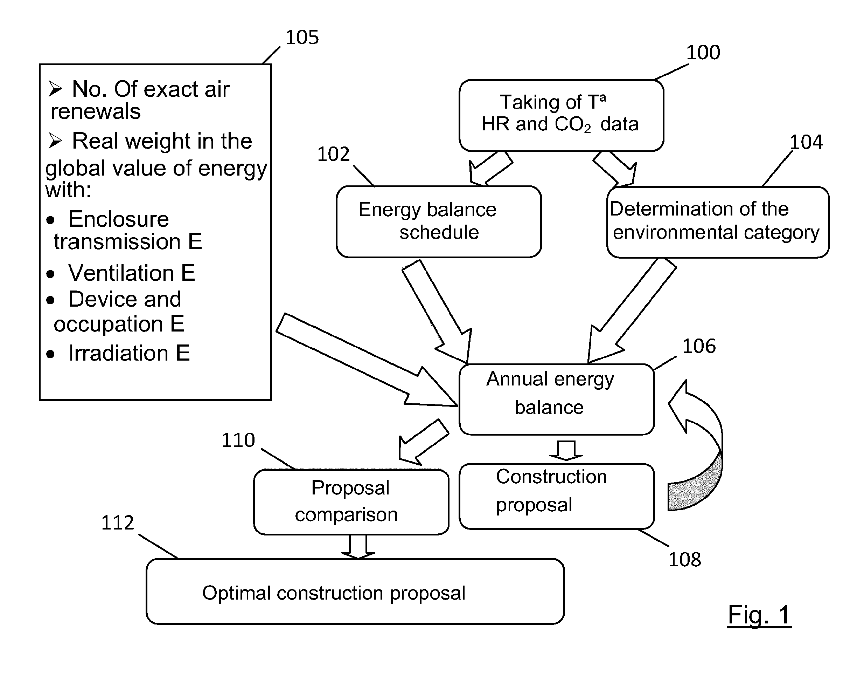

**Figure 1** shows the operation guidelines of the program:
   1. Energy balance of the building under evaluation, as well as a material balance with respect to CO₂ to verify the air quality of the same and the amount of renewals/hour. To achieve the foregoing, the monitoring system uses sensor devices that monitor 100, for a representative time, the temperature (T^{a}), relative humidity (RH) and CO₂ levels.
      Results of this guideline: the hourly energetic balance 102 of the building based on the real samples taken 100 and not on databases provides a series of values 105 at each moment in a precise and instantaneous manner; transmission energy in enclosures, solar radiation energy, device energy, occupation energy, and, above all, air renewal energy. It also provides the real forced and natural air renewal value in a direct manner.
      This monitoring, together with the computer support, allows the users of the building to verify the energy flows thereof, environmental pollution levels and air renewal flows in real time. This procedure is new because no other program is able to monitor and calculate the energy flows at the same time, thereby allowing a precise energy management process at the property.
   2. According to the criteria of current regulations UNE EN ISO 7730, the thermal environment category 104 must be established in each case in order to establish the wellbeing conditions. To achieve the foregoing, the air temperatures, the surface temperatures, and the relative humidity must be monitored during the hours the building under study is occupied. Current programs take these values from databases that are not real.
   3. Undertaking of the rehabilitation study of long-term energetic efficiency, in a stationary regime once the uses and customs of the occupants, the environmental category 104 and the appropriate air quality are established. To achieve the foregoing, the programming corresponding to each month of the year is generated, thereby allowing the global assessment of the energetic balance of the building 106. In addition, construction solutions 108 can be simulated thereafter based on the real data and we can verify if the results improve the energy flows.
   Results of this guideline: this step is repeated as many construction alternatives 108 are proposed, by comparing the results (proposal comparison 110) at the end and obtaining the optimal construction proposal 112 from the construction and economic standpoint.

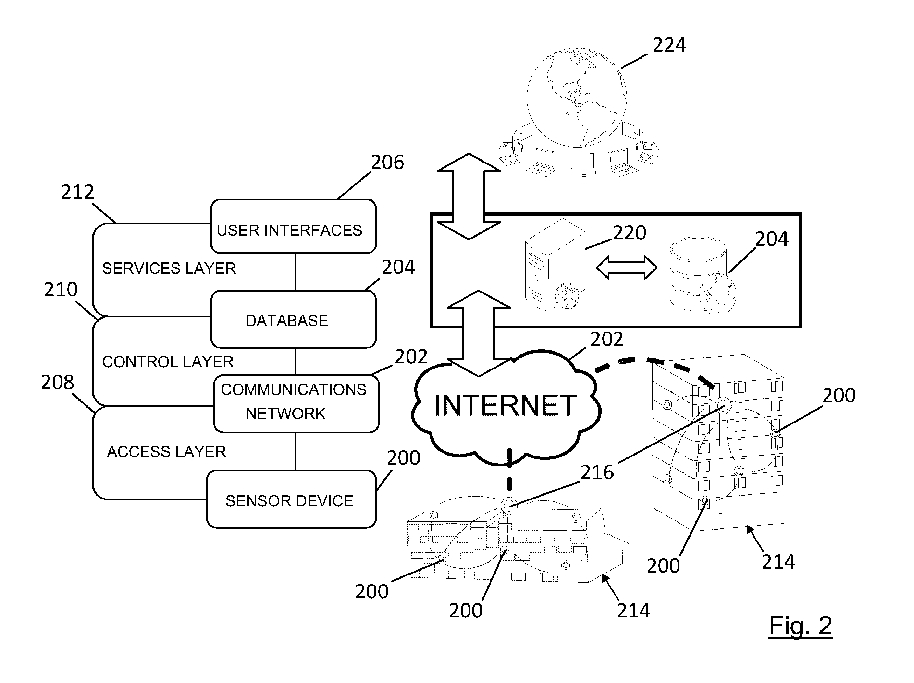

**Figure 2** represents the architecture of the system. It consists of a web-based monitoring platform for energy parameters in real time. The architecture of the system is divided into four parts: sensor devices 200, communications network 202, database 204, and user interface 206. It also shows the access layer 208 between the sensor devices 200 and the communications network 202, the control layer 210 between the communications network 202 and the database 204, and the services layer 212 between the database 204 and the user interface 206.

The system works as follows:
1. The sensor devices 200 (preferably wireless) are placed in different areas within the building 214, taking into account the diversity of orientations and uses. These sensor devices 200 record the temperature, humidity and CO₂ for a determined period of time.
2. The sensor devices 200 send the information captured through the communications network 202 (for example, the Internet, as shown in the Figure) to a server 220 with access to the database 204, which treats the data obtaining the following:
   * The number of exact air renewals in each case (does not use estimates as other existing products do).
   * It assesses the thermal comfort conditions of the users of the building under assessment.
   * With the appropriate thermal comfort conditions and the appropriate measurements of internal air quality, the necessary energy to maintain the same over time is assessed, taking into account the typology of the construction (materials, insulation, orientation of the building, etc.), the customs of the occupants in each case (if they turn the heating or not, computers, kitchens, how many occupants are there, lightning, etc.), external weather conditions (direction of the wind, pressure, temperature, solar radiation, etc.).
3. The server 220 containing the monitored data related to the use and customs allows the technician to simulate several construction solutions, such that subsequent maintenance expenses are optimized.

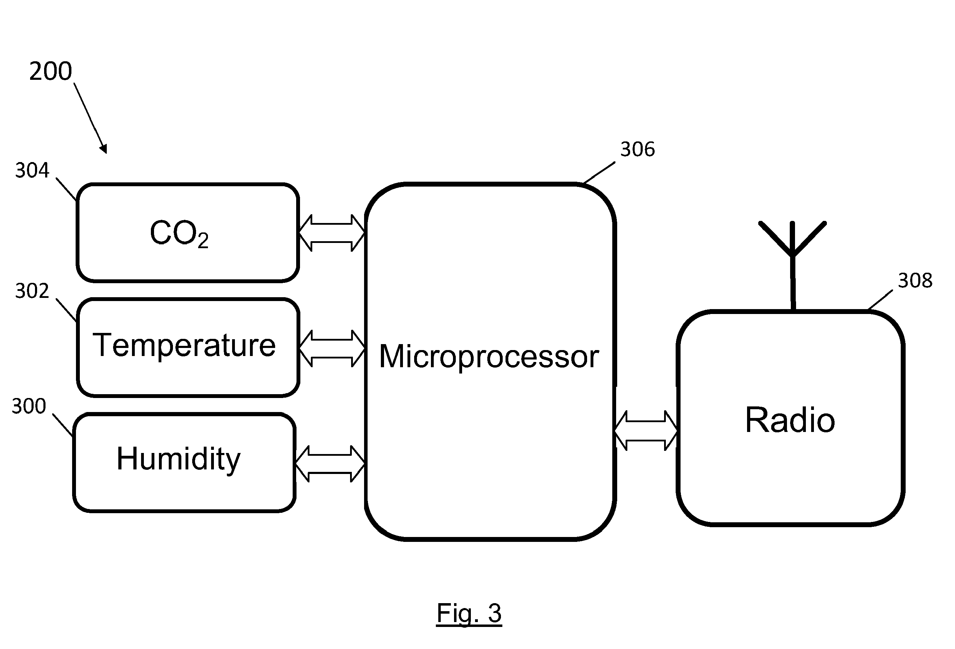

Each measurement point is composed of a sensor device 200, shown in Figure **3****.** The sensor device 200 comprises a sensor for each parameter selected (humidity sensor 300, temperature sensor 302 and CO₂ sensor 304), a microprocessor 306 and wireless communication means 308. Even though this last module does not need to be arranged in the sensor device 200, we recommend doing so to avoid extensive cabling in the building to connect the different units.

The main parameters related to the indoor environment comfort level have been defined: temperature, humidity, and CO₂. With respect to the CO₂ sensors 304, NDIR (Non-Dispersive Infrared) sensors are preferably considered.

In order to read the values of the sensors (300, 302, 304), a low-consumption microprocessor 306 is used. The radio step, through the wireless communications means 308, forms the lower level of the communications network 202. Low consumption IEEE 802.15.4 radio modules (LowPAN) are used with mesh communication topology. This way, all the sensor nodes 200 communicate with each other by establishing a communications network channeling the information from each sensor node 200 towards a network coordinator node of the network 216 (shown in Figure 2), which may be another node or a sensor device 200.

The mesh topology allows deploying a network without having to make a design, given that the network is reconfigured depending on the quality of the link with the neighboring nodes, directing the information circulating through the same towards the coordinator node 216.

The coordinator node 216 has the function of a network gateway and transmits, in real time and by means of web services (Internet 202), to a server 220, the information from the measurements to be stored in the remote database 204. In order to communicate with the server 220, the coordinator node 216 can have Ethernet, WiFi, GPRS and UMTS interfaces.

The information recorded in the database 204 is accessible for the users of the system by means of a web platform 224.

The output format of the results can be a value table, which may be perfectly exported to other programs for its conversion into graphics. The following output values are considered:
1. Averaged hourly values of:
   - Air temperatures
   - Relative humidity
   - CO₂ levels
2. Actual and instantaneous surface enclosure temperature values
3. Actual and instantaneous global energy balance values
4. Actual and instantaneous enclosure transmission energy values
5. Actual and instantaneous air renewal energy values
6. Actual and instantaneous solar radiation energy values
7. Actual and instantaneous device energy values
8. Actual and instantaneous occupation energy values
9. Long-term energy balance values according to the time sequences required (monthly, yearly...)
10. Energetic savings of the different construction solutions proposed and simulated
11. Energetic savings of the different construction solutions simulated and amortization periods of the investment.

## Claims

1. Energy monitoring and simulation system for buildings, **characterized in that** it comprises:
- a plurality of sensor devices (200) installed in different areas within the building to be monitored on an energetic basis, each one of said sensor devices (200) having:
* sensory means (300, 302, 304) to obtain the values of the parameters used in the energetic assessment of the building;
* data processing means (306) configured to receive the information captured by the sensory means (300, 302, 304);
* communication means (308) in charge of receiving and externally communicating the information from the sensory means (300, 302, 304) conveniently processed by the data processing means (306);
- a server (220), with access to a database (204), configured to:
* receive, through a communications network (202), the information coming from the sensor devices (200);
* store said information in the database (204);
* assess and monitor the energetic balance (102, 106) in the building from said information based on real samples taken (100).

2. System according to claim 1, **characterized in that** the sensory means of the sensor device (200) comprise a humidity sensor (300), a temperature sensor (302) and a CO₂ sensor (304).

3. System according to claim 2, **characterized in that** the server (220) is configured to, from the information based on real samples taken (100), assess the thermal comfort conditions of the users of the building and verify air quality in the building and air renewal values.

4. System according to claim 3, **characterized in that** the server (220) is configured to, from the thermal comfort conditions and air quality of the building that were previously obtained, assess the energy necessary for the maintenance thereof over time.

5. System according to any one of the claims 2 to 4, **characterized in that** the server (220) is configured to:
- determine the category of the thermal environment (104) to establish the wellbeing conditions,
- to assess, on a global basis and over a long period of time, the energetic balance (106) based on said environmental category (104) and the information based on real samples taken (100), collected during said period of time.

6. System, according to any one of the claims 2 to 5, **characterized in that** the server (220) is configured to:
- simulate, based on the data of the real samples (100) from different construction proposals (108), to obtain the corresponding energetic balance (106);
- compare (110) the energetic balances obtained for the different construction proposals (108);
- obtain, based on said comparison, the optimal construction proposal (112) to optimize the combination between maximum energy savings and a minimum return on investment period.

7. System, according to any one of the previous claims, **characterized in that** the communication means of the sensor devices (200) are preferably wireless communication modules (308), **and in that** the sensor devices (200) are configured to form wireless nodes with mesh communication topography to establish a communications network to channel the information from each sensor node (200) towards a network coordinator node (216) in charge of the communication with the server (220).

8. System, according to any one of the previous claims, **characterized in that** the server is configured to allow the access to the information recorded in the database (204) through a web platform (224).

9. Energy monitoring and simulation method, **characterized in that** it comprises:
- monitoring, in different areas within the building, the values of the parameters used in the energetic assessment of the building:
- communicating the information to a server (220) with access to a database (204);
- storing said information in the database (204);
- from said information, based on the data of the real samples taken (100), assessing and monitoring the energetic balance (102, 106) of the building.

10. Method, according to claim 9, **characterized in that** the monitored parameters are temperature, relative humidity and CO₂ concentration.

11. Method, according to claim 10, **characterized in that** it comprises, from information based on the data of the real samples (100), assessing the thermal comfort conditions of the users of the building and verify the air quality of the building and the air renewal values.

12. Method, according to claim 11, **characterized in that** it comprises, from the thermal comfort conditions and air quality of the building that were previously obtained, assessing the energy necessary for the maintenance thereof over time.

13. Method, according to any one of the claims 10 to 12, **characterized in that** it comprises:
- determining the category (104) of the thermal environment to establish the wellbeing conditions,
- assessing, on a global basis and over a long period of time, the energetic balance (106) based on said environmental category (104) and the information based on real samples taken (100), collected during said period of time.

14. Method, according to any one of the claims 10 to 13, **characterized in that** it comprises:
- simulating, based on the data of the real samples (100) from different construction proposals (108), to obtain the corresponding energetic balance (106);
- comparing (110) the energetic balances obtained for the different construction proposals (108);
- obtaining, based on said comparison, the optimal construction proposal (112) to optimize the combination between maximum energy savings and a minimum return on investment period.

15. Method, according to any one of the claims 9 to 14, **characterized in that** it comprises enabling the access to the information recorded in the database (204) through a web platform (224).
